# EUROPEAN PATENT SPECIFICATION

(11) **EP 3 445 979 B1**
(45) Date of publication and mention of the grant of the patent: **20.01.2021**
(21) Application number: 17786552.4
(22) Date of filing: 19.04.2017
(51) Int. Cl.: F15D 1/08, B05B 1/06, B05B 1/30, B05B 15/40, B60S 1/48, B60S 1/56

(54) **FLOW CONTROL SYSTEM, JUMPER HOSE ELEMENTS AND FLUID FLOW MANAGEMENT METHOD**
DURCHFLUSSREGELSYSTEM, BRÜCKENSCHLAUCHELEMENTE UND DURCHFLUSSVERWALTUNGSVERFAHREN
SYSTÈME DE RÉGULATION DE DÉBIT, ÉLÉMENTS DE TUYAU DE RACCORDEMENT ET PROCÉDÉ DE GESTION DU DÉBIT D'UN FLUIDE

(30) Priority: 19.04.2016 US 201662324742 P
(43) Date of publication of application: 27.02.2019
(73) Proprietor: DLHBowles Inc., Canton, OH 44706 (US)
(72) Inventor: ROMACK, Alan, S., Columbia MD 21045 (US); KLINE, Zachary, D., Burtonsville MD 20866 (US); ZAMENSKI, Corey,M., Carney MD 21234 (US)
(74) Representative: Müller-Boré & Partner Patentanwälte PartG mbB
(86) International application number: PCT/US2017/028363
(87) International publication number: WO 2017/184730

(56) References cited:
- WO-A2-2015/095516
- DE-A1- 3 308 745
- DE-A1- 3 308 745
- FR-A1- 2 902 755
- FR-A1- 2 950 845
- US-A- 2 593 315
- US-A- 2 767 734
- US-A- 4 884 750
- US-A- 6 035 896
- US-B2- 8 991 730

## Description

### BACKGROUND OF THE INVENTION

### Priority claims and Reference to Related Applications:

This application claims priority to related and commonly owned U.S. provisional patent application no. 62/324,742, filed 4/19/2016. This application is also related to commonly owned Published US Application 20160001330, entitled "Integrated automotive system, nozzle assembly and remote control method for cleaning an image sensor's exterior or objective lens surface".

### Field of the Invention:

The present invention relates to automated or remotely controlled methods and apparatus for cleaning soiled objective lenses on video cameras or image sensors when mounted in a location or configuration in which the lenses are exposed to an environment which may cause an accumulation of dirt on the lens.

### Discussion of the Prior Art:

An increasingly wide range of cars, trucks, SUVs, recreational vehicles and the like incorporate as original equipment integrated video cameras or other sensors which generate an image for display to the driver, operator or other occupants or users within the vehicle's interior. Such cameras or sensors typically provide a view of the exterior surroundings of the vehicle and may be mounted on any surface of the vehicle, often on the front grille or bumper to provide a forward view, on the side panels or mirrors to provide a side view, or on the trunk, rear window or bumper to provide rearward or back-up views to enhance the driver's vision and to improve safety. These cameras or sensors allow drivers to see whether obstacles surround their vehicle using a display screen mounted either on a rear-view mirror or in a navigation system screen.

The external image sensors such as those known as back-up or rear view cameras are typically mounted unobtrusively, and typically are incorporated into existing features such as the vehicle's rear name plate. These external cameras are exposed to the vehicle's harsh environmental surroundings and are often soiled by mud, salt spray or dirt which accumulates on the lens. Accumulating dirt and debris often distort the image that the drivers are viewing, thus creating confusion, dissatisfaction or a safety issue due to poor judgment by relying on an unclear picture.

The advent of low cost, reliable imaging devices using solid-state sensor technologies (e.g., CMOS pixel sensor technology), combined with an improved cost/performance ratio for video displays capable of meeting automotive specifications, and an increasing application rate of video monitor displays for automotive navigation systems and the like, has led to an increasing use of cameras or imaging sensors designed to give the driver a view of those areas around the vehicle which are not in the normal direct field of view of the driver, typically referred to as "blind spots". These areas include the region close to the front of the vehicle, typically obscured by the forward structure of the vehicle, the region along the passenger side of the vehicle, the region along the driver's side of the vehicle rearward of the driver, and the area or region immediately rearward of the vehicle which cannot be seen directly or indirectly through the rear-view mirror system. A camera or imaging sensor may capture an image of the rearward (or sideward or other blind spot area) field of view, and the image may be displayed to the driver of the vehicle to assist the driver in backing up or reversing or otherwise driving or maneuvering the vehicle.

Since the use of electronic cameras in vehicle imaging systems can significantly increase a diligent driver's knowledge of the space immediately surrounding the vehicle prior to and during low speed maneuvers, contributing to the safe completion of such maneuvers, it has become common to provide one or more cameras or imaging sensors on a vehicle to provide images of exterior blind spot scenes for the driver. Furthermore, cameras or sensing devices are becoming widely available for detecting the location of the vehicle with respect to lane markings, spacing from other vehicles and the like to provide additional driver assistance for controlling speed, distance and location.

Such cameras or sensors are mounted in a variety of locations on a vehicle, where they may be vulnerable to damage by the harsh conditions that may be encountered even under normal driving conditions. In particular, for camera sensors mounted on the exterior of a vehicle, protection against environmental effects such as rain, snow, road splash and/or the like, is important. Accordingly, it is often desirable to position them within a protective housing such as, for example, a metallic protective housing such as a die cast housing of aluminum or zinc or the like which may be closed about the camera or sensor and secured together via fasteners or screws or the like. In known exterior camera sensor mounts, a butyl seal, such as a hot dispensed butyl seal, or an O-ring or other sealing member or material or the like, has been provided between the parts of the housing to assist in sealing the housing to prevent water or other contaminants from entering the housing and damaging the camera or sensor positioned therein. However, such housings typically do not provide a substantially water tight seal, and water droplets thus may enter the housing. Furthermore, any excessive vibration of the camera sensor, due to its placement (such as at the exterior of the vehicle), may lead to an undesirable instability of the image displayed to the driver of the vehicle. Since such cameras or sensors are costly to manufacture and to implement on vehicles, it is important to protect them against such damage.

The cameras for rearward vision systems are typically placed or mounted in a location that tends to get a high dirt or moisture buildup on the camera and/or lens of the camera, with no easy way of cleaning the camera and/or lens. In order to reduce such buildup on the cameras, prior art developers proposed using hydrophilic or hydrophobic coatings on the lenses. However, the use of such a coating is not typically effective due to the lack of air flow across the lens, especially within a sealed housing. Also, the appearance of such cameras on the rearward portion of vehicles is often a problem for styling of the vehicle. The prior art U.S. Patent 7,965,336 to Bingle, et al. discloses a camera module with a plastic housing for the image sensor, and which is operable to capture images of a scene occurring exteriorly of the vehicle. Bingle's camera housing assembly is welded together with the image sensor and associated components within enclosed the plastic housing, and includes a "breathable" ventilation portion that is at least partially permeable to water vapor to allow emission of internal water vapor. This design substantially precludes passage of water droplets and other contaminants into the housing and seeks to minimize problems arising from fluid impacting or accumulating within the housing.

The Bingle patent also discloses the use of a coating to keep the objective lenses' view clear, and its housing or cover is optionally provided with an anti-wetting property such as the hydrophobic coating (or stack of coatings) as disclosed in U.S. Pat. No. 5,724,187. Bingle notes that a hydrophobic property on the outermost surface of the cover can be achieved by a variety of means, such as by use of organic and inorganic coatings or by utilizing diamond-like carbon coatings. But Bingle and others do not propose actually taking any affirmative action to remove road debris (e.g., accumulated dirt, dust, mud, road salt or other built-up debris) apart from using such coatings or surface treatments.

Based on consumer preference and at least a perceived improved ability to extract information from the image, it is desired to present an image to the driver that is closely representative of the exterior scene as perceived by normal human vision. It is also desirable that a vehicle's imaging devices or systems be useful in all conditions, and particularly in all weather and lighting conditions. However, it is often difficult to provide an imaging sensor which is capable of providing a clear image in poor weather, especially while driving. This is because conventional imaging systems typically have difficulty resolving scene information when the camera's objective lens is partially obstructed by accumulated debris (e.g., accumulated dirt, dust, mud, road salt or other built-up debris).

In order to have effective use of the camera-based visibility systems in all weather conditions, it is desirable to have an effective method of keeping the camera lens (or the housing surface protecting the objective lens) clean, but the potentially deleterious effects of moisture noted in the above-described Bingle patent remain.

When operating a vehicle during bad weather, drivers are especially reluctant to exit the vehicle to find and inspect the camera's lens. This reluctance likely explains why the inventors of US Patent 6834904 (to Vaitus et al) included a "Nozzle" that is "in close proximity to" a lens for the vehicle's camera or vision unit. The Vaitus '904 patent generally discloses a structure and method for mounting a "Vehicle Liftgate with Component Module Applique" wherein an applique module is adapted for attachment to a vehicle liftgate and, as shown in this patent, the module includes a nozzle which receives fluid from a conduit. However, as noted in the patent, "cleaning of lens 84 may be implemented in other ways" such as hydrophobic lens coatings. It appears that the module and nozzle arrangement described so indifferently in the Vaitus '904 patent was not deemed to be a practicable or effective solution meriting further development, and so appears to have been ignored.

However, the instant applicants have been working in this area and have published patent applications, including Published US Application 20160001330, entitled "Integrated automotive system, nozzle assembly and remote control method" which describe and illustrate prior work for cleaning an image sensor's exterior or objective lens surface by the use of a fluid nozzle directing fluid onto the lens surface. As noted in the '330 application, conserving cleaning fluid is a priority for Automotive OEMs, and so the need to adequately clean a lens surface must be balanced with the need to avoid use of too much water. There is a need, therefore, for a convenient, effective and unobtrusive system and method for cleaning an exterior objective lens surface, preferably by remote control, wherein the system satisfactorily cleans the lens without overusing the limited supply of fluid typically provided in an automobile.
FR 2 950 845 A1 discloses the preamble of the independent claim 1.

All passenger automotive vehicles contain washer systems to clean the front windscreen and provide a clear field of vision to the driver. These same vehicles may contain additional nozzles to clean the rear window or the headlamps, or, as discussed above, to clean image sensors such as cameras or LIDAR. Typically, a single pump drives the washer system and is designed and sized to supply fluid for the highest flowrate portion of the system, either the front windscreen nozzles or the headlamp nozzles. But an automotive washer system often has multiple branches. A multi-branch system may be supplied with a dual outlet pump or with two or more similar single or dual outlet pumps. Consequently, when fluid is demanded at a location such as a sensor or at the rear window where a lower target flowrate is desired to conserve fluid, the pump is oversized for the application and generates more pressure than may be necessary for cleaning. This higher pressure results in a high flow rate and excessive fluid consumption. Conservation of fluid is desirable on all vehicles, but becomes critical when a vehicle contains multiple nozzles, such as when one or more sensors or objectives are washed.

Typically the flow rate is constrained by restricting the size of the fluid outlet. This is undesirable, however, as the likelihood of clogging the nozzle increases in inverse proportion to the size of the nozzle outlet. Additionally, difficulty of manufacturing also increases in inverse proportion to the size of the nozzle outlet, and normal manufacturing tolerances have an increased effect on the performance of smaller nozzles than would be observed on proportionally larger nozzles.

### OBJECTS AND SUMMARY OF THE INVENTION

Accordingly, it is an object of the present invention to overcome the above-mentioned difficulties by providing a lens cleaning system for automotive applications wherein a fluid spray is supplied from a pressurized fluid source to a nozzle at flow rates that are sufficient to adequately clean a lens without wasting fluid.

It is a further object of the invention to provide a lens cleaning system for multiple lenses in an automotive application, wherein fluid is supplied from a single pressurized fluid supply to multiple spray nozzles with minimal flow variation.

It is another object of the invention to provide a lens cleaning system for multiple lenses in an automotive application incorporating fluid pressure compensation for reliably generating reduced flow rates while maintaining adequate lens cleaning.

It is another object of the invention to provide a lens cleaning system for multiple lenses in an automotive application which includes a pressure control device or flow regulator to provide a consistent flow rate despite fluctuations in system pressure.

It is still another object of the invention to provide a method for maintaining adequate cleaning fluid flow in a lens cleaning system for automotive applications wherein fluid is supplied from a pressurized fluid source to a nozzle at flow rates that are sufficient to adequately clean a lens without wasting fluid.

The system of the present invention overcomes the foregoing issues and problems by including a pressure control device or flow regulator in the washer system. Although pressure control devices exist and have been used in other fields, such as residential plumbing fixtures or irrigation devices where a constant flow rate is desired despite fluctuations in system pressure, the pressure flow system described herein is characterized by a flow rate versus pressure curve where for any pressure P, the flow rate Q₁ is less than or equal to the flow rate of a fixed diameter orifice characterized by the equation Q=kP^{0.5}, where Q is flow rate, P is pressure, and k is a coefficient which varies with the orifice area.

As is known in the art, automotive washer systems typically incorporate a pump, tubing, one or more spray nozzles, and one or more check valves. The check valve(s) are generally located in close proximity to the nozzle(s) in order to keep the system primed between sprays. Some systems may additionally include one or more filters in order to screen particulate material from the fluid and thus prevent clogging of the nozzle, prolonging system life. The system may also include one or more connectors to join separate lengths of tubing. Briefly, in accordance with the present invention, an automotive washer system also incorporates a pressure control device which could be included as a separate component anywhere in the system to regulate flow to spray nozzles for cleaning camera lenses or other sensors, but which does not restrict flow to the primary wash area, either the front windscreen nozzles or the headlamp nozzles. Alternately, the pressure control device could be integrated into any of the components mentioned above: the nozzle, the check valve, the filter, or a connector. Commonly check valves are integrated into nozzles as a single subassembly. Two or more of these component types could be incorporated into a single device, such as a nozzle integrally containing both a pressure control device (PCD) and a check valve, or a filter integrally containing a PCD and a check valve.

The automotive wash system of the invention generally contains a fluidic, shear, or jet nozzle for washing sensors or lens components for automotive devices as well as glazing, mirrors and headlamps, and incorporates a source of fluid (42, 44) capable of providing a supply fluid flow rate of between 1 and 2500mL/min with a supply pressure of between 1 and 80psi and a pressure control device (180) fluidly connected between the source of fluid and a nozzle (50) in such a way that flow to the nozzle does not exceed 90% of the nominal flow rate without the pressure control device for supply pressures between 30 and 60psi, or with a lower target flowrate for the same pressure range.

The pressure control, or compensating, device may be a flexible orifice type, an O-ring type, a spring and piston device, a fluidic (e.g., vortex), or some other suitable in-line device. In accordance with a preferred aspect of the invention, the pressure control device comprises a flexible orifice combined with an in-line filter located in spray system tubing to reliably generate an optimum flow rate with changes in fluid pressure. In this preferred form, the spray nozzle is preferably a fluidic spray nozzle in which the supplied fluid under pressure produces a vortex to generate a desired spray output that may be directed at a lens or sensor surface to be cleaned. The pressure control device reliably produces flow rates which will maintain the nozzle vortex, but will prevent excessive flow even with a high pressure fluid supply so that the desired spray is produced without wasting fluid and without under-supplying the cleaning solution to the target lens or sensor surface and failing to provide the desired cleaning.

Broadly speaking, then, an automotive wash system in accordance with the present invention contains a fluidic, shear, or jet nozzle for washing sensors or lens components for optical devices as well as nozzles for washing glazing, mirrors and headlamps. The system operates with a supply fluid flow rate of between 1 and 2500mL/min with a supply pressure of between 1 and 80psi with the fluid supply being fluidly connected through a pressure control device (PCD), or flow regulator, in such a way that flow to the nozzle does not exceed 90% of the nominal flow rate without the PCD for supply pressures between 30 and 60psi, or with a lower target flowrate for the same pressure range. The PCD is an elastomeric body incorporating multiple flexible tabs in the fluid flow path responsive to flow rate and pressure to vary the area of the flow path. More particularly, the pressure control device incorporates a toroidal body portion (290) formed by an annular wall (292) open at its top (301) and its bottom (304) and having annular upper (302) and bottom (306) flat surfaces, substantially cylindrical upper (294) and lower (295) inner surfaces, and a convex outer wall surface (296) surrounding and coaxial with an axis (298) to form a central through passageway (300). The device includes at least three inwardly-extending, flexible tabs (310, 312 and 314) extending inwardly from the wall (292) between the upper and lower inner wall surfaces (294, 295) and into the through passageway, with the tabs being spaced apart around the circumference of the inner wall 294 to form spaced, radially-extending slots (322, 324, 326) and a central opening (328). When at rest, the tabs provide a maximum fluid flow area through the slots and central opening; however, the tabs respond to fluid flow through the passageway to reduce the fluid flow area to limit the flow rate of the fluid.

In greater detail, the automotive washing system of the invention incorporates one or more "jumper hoses" which are in fluid communication with a conventional fluid source in which a pump supplies fluid from a reservoir at high flow rates and pressures sufficient to operate conventional windshield washers and the like. The jumper hose supplies this pressurized fluid to selected nozzles which clean such devices as cameras or camera lenses, and various other sensors, and may be referred to herein as "low-flow" or vortex-generating nozzles. The jumper hose of the invention incorporates a suitable connector at its input end for receiving fluid from the pump, at least a check valve, a filter and a pressure control device (PCD), a connector at its output end for connection to a nozzle, and suitable lengths of hose or tubing for interconnecting these components and for configuring the jumper hose to fit its particular automotive application. As herein described, the filter and the pressure control device preferably are combined in a single filter element housing.

In a preferred form of the invention, the PCD consists of a toroidal body portion 290 formed by an annular wall 292 having a substantially cylindrical upper inner surface 294, a substantially cylindrical lower inner surface 295, and a convex outer wall surface 296 surrounding and coaxial with an axis 298 to form a central through passageway 300. The body portion is open at its top 301, and has an annular upper flat rim, or surface 302. The bottom of the toroid 290 is also open, and has an annular flat bottom surface 306. Midway along the axial length of body portion 290 are preferably three inwardly-extending, flexible flaps, or tabs 310, 312 and 314 which extend inwardly from wall 292 between the upper and lower inner wall surfaces 294 and 295. The tabs are generally triangular in shape, and have arcuate bases 316, 318 and 320, respectively, where they meet the cylindrical side walls. The tabs are spaced apart around the circumference of the inner wall 294 with the edges of adjacent tabs being spaced apart to form three radially-extending slots 322, 324 and 326 extending outwardly from a central, or axial opening 328 toward the inner surfaces of wall 292. The tabs preferably are tapered inwardly in cross-section from their respective arcuate bases to respective central tips 330, 332 and 334 that are spaced around and define the central opening 328. The tabs intersect the upper wall surface portion 294 at an acute angle at an upper intersection 336, to form an upwardly-sloped rest position, and intersect the lower wall surface 295 at an obtuse angle at lower intersection 338.

The pressure control device 180 is constructed of an elastomeric material so that the tabs 310, 312 and 314 are flexible. The slots are sufficiently wide to ensure flexibility of the tabs and combine with the central aperture, or opening, to provide a maximum passage area for fluid passing through the device. The tabs respond to a predetermined fluid flow to flex downwardly and inwardly to gradually close the slots and to reduce the diameter of the central opening so that at a predetermined flow and pressure the tabs close the fluid passage area to a predetermined minimum, thereby limiting the flow rate through the PCD to a preset maximum, even with increased pressure. The selection of the characteristics of the material used to form the PCD, the dimensions of the tabs 310, 312 and 314 and thus the dimensions of the slots between the tabs, and/or the thickness of the flexible tabs determines the selected pressure/flow point at which the tabs reach a position in which flow is constricted to a desired flow rate through the area of the central aperture.

In summary, then, the automotive wash system of the invention contains a fluidic, shear, or jet nozzle for washing sensors or lens components for automotive sensor or camera devices as well as for washing glazing, mirrors, headlamps and the like, wherein the system includes a source of fluid (42, 44) capable of providing a supply fluid flow rate of between 1 and 2500mL/min with a supply pressure of between 1 and 80psi. The system incorporates at least one spray nozzle (50), with a pressure control device (180) fluidly connected between the source of fluid and the nozzle in such a way that flow to the nozzle does not exceed 90% of the nominal flow rate without the pressure control device for supply pressures between 30 and 60psi, or with a lower target flowrate for the same pressure range. The pressure control device is an elastomeric toroidal body (290) incorporating multiple flexible tabs (310, 312, 314) extending into a fluid flow path (300) through the body and responsive to flow rate and pressure to vary the area of the flow path.

In a preferred form, the invention incorporates a combination filter and pressure control device (140) having a housing (142) with an inlet passageway (204) at an upstream end and an outlet passageway (212) at a downstream end (184) and a filter cartridge (176) in the filter housing, the cartridge having an extension (178) which engages the housing to position the filter cartridge in the housing and which receives the pressure control device. The flexible tabs in the pressure control device are spaced apart around the inner circumference of the PCD toroidal body to form spaced, radially-extending slots (322, 324, 326) and a central opening (328), with the tabs at rest forming a maximum fluid flow area through the slots and central opening. The tabs are responsive to fluid flow (339) through the passageway to reduce the fluid flow area to limit the fluid flow rate.

The combination filter and pressure control device further includes an annular rigid spacer (190) located in the filter cartridge extension, engaging a lower surface (360) of the pressure control device, and held by an end wall (186) of the outer housing in axial alignment within the housing to provide a flow path through the combination filter and pressure control device that is controlled by the flexible tabs. The rigid spacer sized to engage the lower surfaces of the tabs to regulate the flexing of the tabs in response to fluid flow.

The invention is further directed to a method for controlling fluid flow in an automotive wash system, the method including supplying a toroidal body portion (290) formed by an annular wall (292) open at its top (301) and its bottom (304) and having annular upper (302) and bottom (306) flat surfaces, substantially cylindrical upper (294) and lower (295) inner surfaces, and a convex or bulging outer wall surface (296) surrounding and coaxial with an axis (298) to form a central through passageway (300). The method further includes forming in the body portion at least three flexible tabs (310, 312 and 314) extending inwardly from the wall (292) between the upper and lower inner wall surfaces (294, 295) and into the through passageway and spacing the tabs around the circumference of the inner wall (294) to form spaced, radially-extending slots (322, 324, 326) and a central opening (328). The tabs at rest form a maximum fluid flow area through the slots and central opening and are responsive to fluid flow (339) through the passageway to reduce the fluid flow area to limit the flow rate of the fluid. The method also includes selecting the characteristics of the material used to form the flexible tabs, selecting the dimensions of the tabs and thus the dimensions of the slots between the tabs, and selecting the thickness of the flexible tabs to determine a selected pressure/flow point at which the tabs reach a closed position in which flow is constricted to the area of the central aperture.

### BRIEF DESCRIPTION OF THE DRAWINGS

The above and still further objects, features and advantages of the present invention will become apparent upon consideration of the following detailed description of a specific embodiment thereof, particularly when taken in conjunction with the accompanying drawings, wherein like reference numerals in the various figures are utilized to designate like components, and wherein:
Fig. 1 is a rear perspective view of a vehicle having an imaging system or back-up camera system as disclosed in US Patent 7,965,336 (to Bingle et al), in accordance with the Prior Art;
Fig. 2 is a top plan view of the vehicle of Fig. 1;
Fig. 3 is an end perspective view of a sealed solid-state image sensor or camera module as disclosed in US Patent 7,965,336, in accordance with the Prior Art;
Fig. 4 is a side elevation view of the camera module of Fig. 3;
Fig. 5 is a sectional view of the camera module of Fig 4, taken along the line IX-IX;
Fig. 6 is a diagrammatic illustration of a first automotive washer system for supplying fluid under pressure to a fluid spray nozzle and incorporating a fluid supply, pump, tubing, connectors and a filter incorporating a pressure control device in accordance with the present invention;
Fig. 7 is a diagrammatic illustration of a second version of an automotive washer system for supplying fluid under pressure to a fluid spray nozzle and incorporating a fluid supply, pump, tubing, connectors and a filter incorporating a pressure control device in accordance with the present invention;
Fig. 8 is a photographic illustration of an implementation of the automotive washer system of Fig 7;
Fig. 9 is a perspective view of a combination in-line filter and pressure control device (PCD) for an automotive washer system in accordance with the present invention;
Fig. 10 is a cross-sectional view of the combination filter and PCD of Fig. 9;
Fig. 11 is an elevation view of an inner body portion of the device of Fig. 9;
Fig. 12 is a partial cross-sectional view of the combination filter and PCD of Fig. 9, with the outer body portion removed for clarity;
Fig. 13 is a top perspective view of the pressure control device incorporated in the combination filter and PCD of Fig. 10;
Fig 14 is a bottom plan view of the pressure control device of Fig. 13;
Fig. 15 is a side elevation of the pressure control device of Fig. 13;
Fig. 16 is a top plan view of the pressure control device of Fig. 13;
Fig. 17 is a cross-section taken along lines 17-17 of Fig. 16;
Fig. 18 is a cross-section taken along lines 18-18 of Fig. 16;
Fig. 19 is a top perspective view of a spacer used in the filter element of Fig. 9;
Fig. 20 is a cross-section taken at line 20-20 of Fig. 19;
Fig. 21 is a flow rate v. pressure graph for the device of the invention;
Fig. 22 is a flow rate v. pressure graph for a prior art device;
Fig.23 is a flow rate v. pressure graph for another prior art device; and
Fig. 24 is a diagrammatic illustration of automotive washer systems in accordance with the present invention.

### DESCRIPTION OF A PREFERRED EMBODIMENT

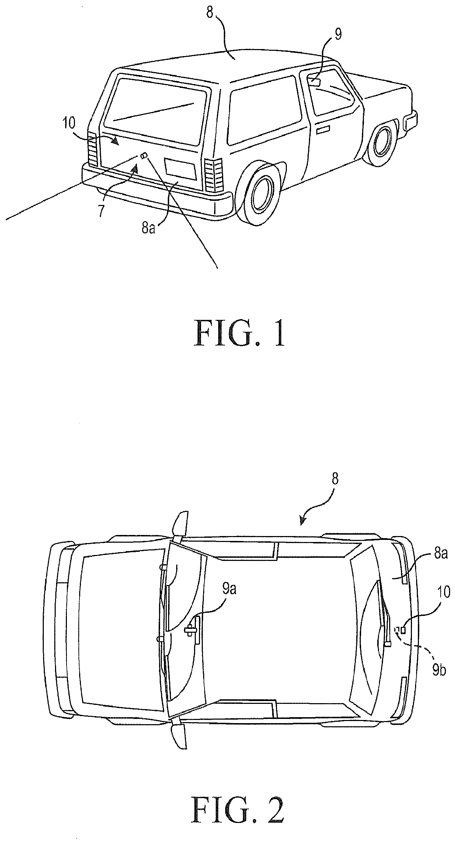

In order to provide an exemplary context and basic nomenclature for the present invention, reference is made to Figs 1-5, illustrating a prior art imaging system and a camera module for a vehicle, as disclosed in US Patent 7,965,336 to Bingle et al (hereafter "Bingle"). This overview is for the purpose of illustrating possible applications of the invention, and establishing nomenclature and automotive industry standard terminology, in accordance with the Prior Art.

Referring now to Figs. 1-5, an image capture system or imaging or vision system 7 is positioned on a vehicle 8, such as at a rearward exterior portion 8a of the vehicle, and is operable to capture an image of a scene occurring interiorly or exteriorly of the vehicle, such as rearwardly of the vehicle, and to display the image at a display or display system 9a of the vehicle where it is viewable by a driver or occupant of the vehicle (see, e.g., Figs. 1 and 2). Imaging system 7 includes a camera module 10, which is mountable on, at or in the vehicle to receive an image of a scene occurring exteriorly or interiorly of the vehicle, and a control 9b that is operable to process images captured by an image sensor 18 of camera module 10. Camera module 10 includes a plastic camera housing 11 and a metallic protective shield or casing 16 (see Figs. 1 and 2).

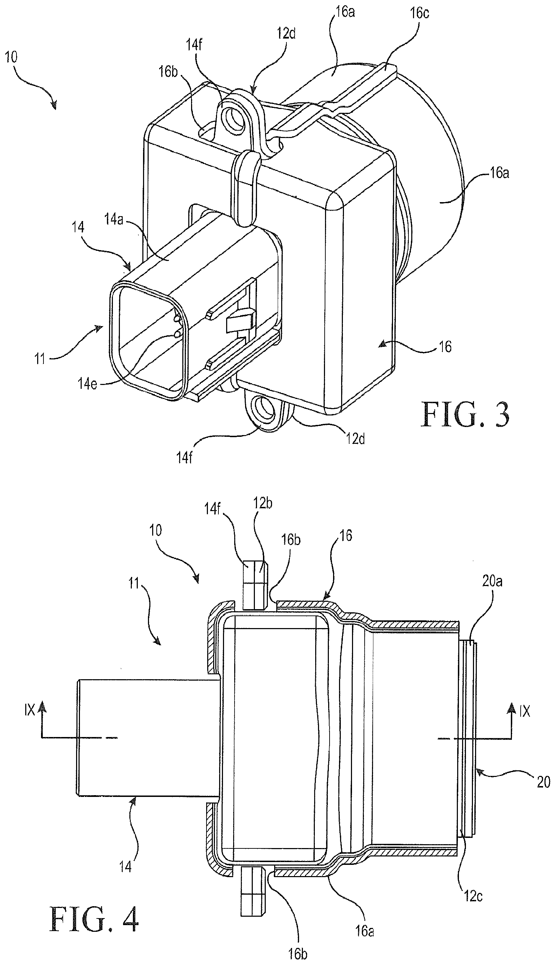

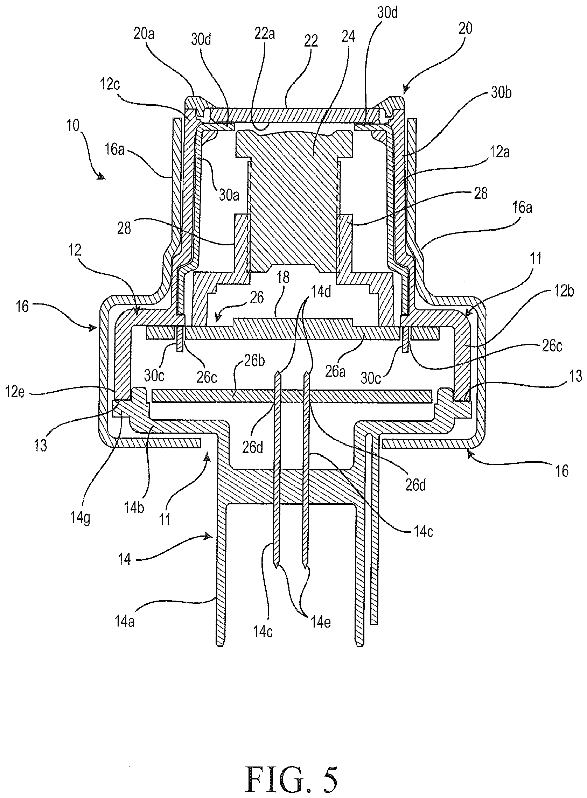

Camera housing 11 includes a camera housing portion 12 and a connector portion 14, which mate or join together and are preferably laser welded or sonic welded together to substantially seal the housing 11 to substantially limit or prevent water intrusion or other contaminants from entering the housing, as discussed below. Housing 11 substantially encases a camera or image sensor or sensing device 18 (Figs 4 and 5), which is operable to capture an image of the scene occurring exteriorly or interiorly of the vehicle, depending on the particular application and location of camera module 10. Housing 11 also includes a cover portion 20 at an end of camera housing portion 12. Cover portion 20 provides a transparent cover plate 22 which allows the image of the scene exteriorly or interiorly of the vehicle to pass therethrough and into housing 11 to a camera image sensor 18. Camera module 10 may include the protective shield 16, which substantially encases camera housing portion 12 and a portion of connector portion 14, thereby substantially limiting or reducing electronic noise going into or out of the camera module and/or protecting the plastic housing 11 from damage due to impact or the like with various items or debris that may be encountered at the exterior of the vehicle.

A camera or imaging sensor 18 useful with the present invention may comprise an imaging array sensor, such as a CMOS sensor or a CCD sensor or the like, such as disclosed in U.S. Pat. Nos. 5,550,677; 5,670,935; 5,796,094; 6,097,023, and 7,339,149. The camera module 10 and imaging sensor 18 may be implemented and operated in connection with various vehicular vision systems such as a forwardly, sidewardly or rearwardly directed vehicle vision system utilizing principles disclosed in U.S. Pat. Nos. 5,550,677; 5,670,935; 5,760,962; 5,877,897; 5,949,331; 6,222,447; 6,302,545; 6,396,397; 6,498,620; 6,523,964; 6,611,202; and 6,201,642, a trailer hitching aid or tow check system, such as the type disclosed in U.S. Pat. No. 7,005,974, a reverse or sideward imaging system, such as for a lane change assistance system or lane departure warning system, such as the type disclosed in U.S. Pat. No. 7,038,577, a system for determining a distance to a leading or trailing vehicle or object, such as a system utilizing the principles disclosed in U.S. Pat. No. 6,396,397, or the like.

For example, the camera or sensor 18 may comprise a LM9618 Monochrome CMOS Image Sensor or a LM9628 Color CMOS Image Sensor, both of which are commercially available from National Semiconductor. Other suitable cameras or sensors from other vendors (e.g., Sony®, Panasonic®, Magna™ and others) may be implemented with the camera module.

Although shown at a rear portion 8a of vehicle 8, image sensor 18 and camera module 10 may be positioned at any suitable location on vehicle 8, such as within a rear panel or portion of the vehicle, a side panel or portion of the vehicle, a license plate mounting area of the vehicle, an exterior mirror assembly of the vehicle, an interior rearview mirror assembly of the vehicle or any other location where the camera may be positioned and oriented to provide the desired view of the scene occurring exteriorly or interiorly of the vehicle. The camera module 10 is particularly suited for use as an exterior camera module. The image captured by the camera may be displayed at a display screen or the like that is positioned at a selected location within the cabin of the vehicle, such as at an interior rearview mirror assembly (such as disclosed in U.S. Pat. No. 6,690,268), or elsewhere at or within the vehicle cabin, as by using the principles disclosed in U.S. Pat. Nos. 5,550,677; 5,670,935; 5,796,094; 6,097,023 and 6,201,642, and/or U.S. Pat. No. 6,717,610.

As best shown in Figs. 3, 4 and 5, camera housing portion 12 includes a generally cylindrical portion 12a extending outwardly from a base portion 12b. Camera housing portion 12 comprises a molded plastic component and may include a pair of heater terminals or elements 30a, 30b insert molded within and/or along the walls of cylindrical portion 12a. Cylindrical portion 12a receives a lens or optic system 24 which functions to focus the image onto camera sensor 18, which is positioned at a circuit board 26 mounted within the base portion 12b of camera housing portion 12.

Lens system 24 is positioned within cylindrical portion 12a of camera portion 12 to receive light from the exterior or interior scene through cover 22 at end 12c of camera portion 12. Lens system 24 is mounted, as by threaded engagement, to camera cover or housing 28, which functions to substantially cover or encase camera or sensor 18 to substantially prevent or limit incident light from being received by camera sensor 18 and interfering with the image received through cover 22 and lens system 24. The lens system 24 may be any small lens or lens system which will focus an image of a scene exterior of the camera module onto the camera image sensor 18, such as, for example, the types disclosed in U.S. Pat. No. 6,201,642 or U.S. Pat. No. 6,757,109. The lens system 24 may provide a wide-angle field of view, such as approximately 120 degrees or more (as illustrated in Fig 1).

Cover portion 20 is mounted at an outer end 12c of camera housing portion 12 opposite from base portion 12b, as shown in Figs 4 and 5. Cover portion 20 includes an outer circumferential ring or cover retainer 20a, which engages an outer surface of transparent cover 22 and functions to retain the transparent cover in position at the end 12c of the cylindrical portion 12a of camera housing portion 12. Preferably, circumferential ring 20a is laser welded or sonic welded or otherwise joined or bonded to outer end 12c of cylindrical portion 12a of camera housing portion 12 to substantially seal and secure cover portion 20 onto the camera housing portion, and may limit or substantially preclude any water intrusion or contaminant intrusion into the camera housing portion at the outer end 12c.

In the illustrated embodiment, base portion 12b is generally square and defines a generally square mating edge 12e around the base portion for mating and securing it to a corresponding edge 14g of connector portion 14 at joint 13. Base portion 12b receives circuit board a 26 and image sensor 18 therein, while a camera housing or shield 28 and lens or lens system 24 extend into cylindrical portion 12a of camera portion 12 to receive an image through transparent cover 22.

Connector portion 14 of housing 11 is a molded plastic component and includes a connector terminal or connector 14a, such as a multi-pin snap-on connector or the like, extending from a base portion 14b. Base portion 14b is formed (such as in a square shape as shown in the illustrated embodiment) to substantially and uniformly mate or connect to base portion 12b of camera housing 12, as can be seen with reference to Figs. 3-5. The base portions 12b and 14b mate together and define a pocket or space for receiving and securing circuit board 26. Base portions 14b and 12b may be laser welded or sonic welded together at their mating joint or connection 13. Laser or sonic welding of the joint melts the plastic edges or seams together to substantially hermetically seal housing 11 to prevent water intrusion or other contaminant intrusion into housing 11 of camera module 10. Optionally, and less desirably, the base portions may be otherwise joined or substantially sealed together (such as via suitable adhesives and/or sealants). The module may optionally include a vented portion or semi-permeable membrane to vent the module's interior. The base portions 12b and 14b may further include mounting tabs or flanges 12d and 14f, respectively, which extend outwardly from base portions 12b and 14b. Mounting tabs 12d and 14f are generally aligned with one another when the base portions are secured together and include an aperture therethrough for mounting the camera module 10 at or to the vehicle 8 via suitable fasteners or the like (not shown). Although shown as having generally square-shaped mating portions, connector portion 14 and camera portion 12 may have other shaped mating portions or surfaces.

Multi-pin connector 14a extends from base portion 14b and includes a plurality of pins or terminals 14c for electrically connecting camera module 10 with a connector (not shown) on a wiring harness or cables of the vehicle. For example, ends 14d of terminals 14c may connect to circuit board 26, while the other ends 14e of terminals 14c connect to the corresponding connector of the vehicle. The corresponding connector may partially receive the ends 14e of pins or terminals 14c at multi-pin connector 14a and may snap together with multi-pin connector 14a via a snap connection or the like. As best shown in Fig. 5, ends 14d of terminals 14c protrude or extend from connector portion 14, such that the ends 14d may be received within corresponding openings or apertures 26c in circuit board 26 when housing portion 11 is assembled.

As shown in Fig. 5, connector portion 14 may provide a generally straight multi-pin connector extending longitudinally from the base portion of the housing 11. However, other shapes of connectors, such as angled connectors or bent connectors or the like, may be implemented, depending on the particular application of the camera module.

As described above, the camera module 10 may be substantially hermetically sealed, so that water intrusion into the module is limited or substantially precluded. Base portion 12b of camera housing portion 12 and base portion 14b of connector portion 14 are correspondingly formed so as to substantially mate or join together at their mating seam 13, whereby the portions may be laser welded or sonic welded together or otherwise joined, while cover portion 20 is also laser welded or sonic welded or otherwise secured and substantially sealed at the opposite end 12c of camera portion 12, in order to substantially seal the camera housing. Laser or sonic welding techniques are preferred so as to join the materials at a state where they are able to re-flow, either via heat, vibration or other means, such that the materials re-flow and cross-link and become a unitary part. Such joining results in a substantially hermetically sealed camera module. Additionally, the pores in the plastic as well as any voids around the insert molded pins and stampings may be sealed with a Loctite® brand sealing material or other suitable sealing material, to further limit or substantially preclude entry of water droplets and/or water vapor into the housing of the substantially sealed camera module 10.

Circuit board 26 includes a camera mounting circuit board 26a, which is connected to a connector receiving circuit board 26b via a multi-wire ribbon wire or the like (not shown). Camera mounting circuit board 26a is mounted or secured to the base portion 12b of camera portion 12, while connector circuit board 26b is mounted or secured to the base portion 14b of connector portion 14. Camera or image sensor 18 is mounted at a surface of camera circuit board 26a, and is substantially encased at circuit board 26a by camera cover 28 and lens 24 (Fig. 5). Camera circuit board 26a includes a pair of apertures 26c for receiving ends 30c of terminals 30a, 30b. Likewise, connector circuit board 26b includes a plurality of openings or apertures 26d for receiving ends 14d of connector terminals 14c therethrough. The ends of the pins or terminals may be soldered in place in their respective openings. After all of the connections are made, the housing may be folded to its closed position and laser welded or sonic welded together or otherwise joined or bonded together to substantially seal the circuit board within the housing.

Cameras or sensors such as the camera module 10, for example, are now often successfully incorporated in vehicles of various types, improving safety and facilitating the driving experience. One difficulty found in the use of such devices is the tendency of such cameras or sensors to collect dust and dirt, obscuring the images they provide and reducing their utility. This problem has been overcome in the prior art through the provision of spray nozzles adjacent the camera or sensor lens to allow periodic cleaning of the lens. All passenger vehicles contain washer systems incorporating nozzles directing fluid to clean the front windscreen to provide a clear field of vision to the driver. These same vehicles now may also contain additional nozzles to clean the rear window, headlamps, or sensors such as cameras or LIDAR.

An automotive washer system often has multiple branches to reach the various cleaning nozzles, and such a multi-branch system may be supplied with a single fluid reservoir and a dual outlet pump or with multiple reservoirs and two or more similar single or dual outlet pumps. Typically, the pump driving the system is designed and sized to supply fluid for the highest flowrate portion of the system, which normally would be either the front windscreen nozzles or the headlamp nozzles. Consequently, when fluid is demanded at a location such as a camera or sensor cover or lens or at the rear window, where lower target flowrates are desired to conserve fluid, the pump is oversized for the application and generates more pressure than may be necessary for cleaning. This high pressure results in a high flow rate and excessive fluid consumption. Conservation of fluid is desirable on all vehicles, but becomes critical when a vehicle contains multiple nozzles, such as when one or more sensors or objectives are to be washed.

To avoid overuse of the fluid, the flow rate to a low-flow nozzle may be constrained by restricting the size of the fluid outlet. This is undesirable, however, as the likelihood of clogging the nozzle increases in inverse proportion to the size of the nozzle outlet. Additionally, difficulty of manufacturing also increases in inverse proportion to the size of the nozzle outlet, and normal manufacturing tolerances have an increased effect on the performance of smaller nozzles than would be observed on proportionally larger nozzles.

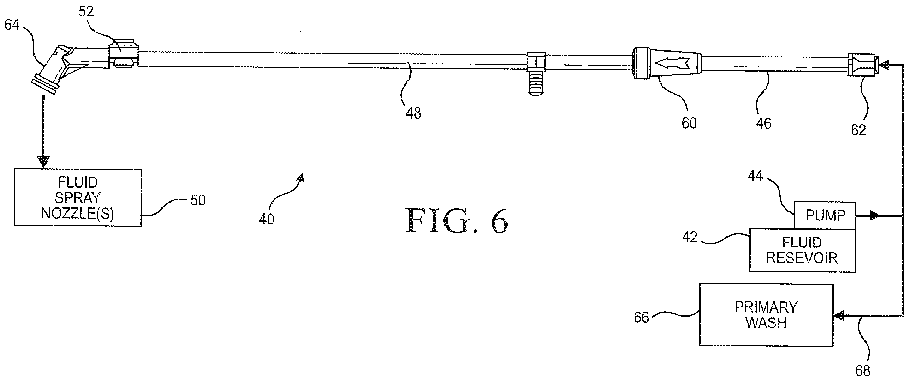

In accordance with the present invention, the system described herein addresses these issues by including a pressure control device or flow regulator in the flow path to a nozzle that only requires a relatively low flow. Numerous types of pressure control devices exist and have been used in other fields, such as in residential plumbing fixtures or irrigation devices, where a consistent flow rate is desired despite fluctuations in system pressure but are not satisfactory in the automotive field, where size and weight restrictions preclude the use of such devices. As illustrated in Fig. 6, an automotive washer system 40 typically incorporates a fluid reservoir 42 connected through a pump 44 to suitable lengths of fluid supply tubing or hose 46, 48 to one or more fluid spray nozzles 50 which preferably are vortex-generating nozzles of the type found in fluidic systems, and which utilize a relatively low fluid flow to produce a controlled spray. One or more check valves 52 may be incorporated in the system 40, and such check valve(s) are generally located in close proximity to the nozzle(s) in order to keep the system primed between sprays. The illustrated system is illustrated as carrying a conventional external mounting barb 54 which may be positioned as required on the tubing to secure it in place, in conventional manner. The illustrated washer system additionally includes one or more inline filters 60 in order to screen particulate material from the fluid and thus prevent clogging of the nozzle to prolong system life. One or more connectors such as the quick-connect units 62 and 64 are utilized, as needed, to join separate lengths of tubing and to connect the tubing to the pump 44 and to the nozzles 50. For convenience, such an assembly may be referred to herein as a "jumper hose".

In accordance with the invention, and as will be described in detail below, a pressure control device may be incorporated as a separate component anywhere in the system 40, but should not restrict flow to spray nozzles in the primary wash area 66, which may be either the front windscreen nozzles or the headlamp nozzles of a vehicle and which are connected to pump 44 by way of tubing 68. Alternatively, the pressure control device may be integrated into any of the jumper hose components mentioned above, such as the nozzle 50, the check valve 52, the filter 60, or a connector 62 or 64. Commonly, check valves are integrated into nozzles as a single subassembly, but two or more of the foregoing component types could be incorporated into a single device, such as a nozzle integrally containing both a PCD and a check valve, or a filter integrally containing a PCD and a check valve.

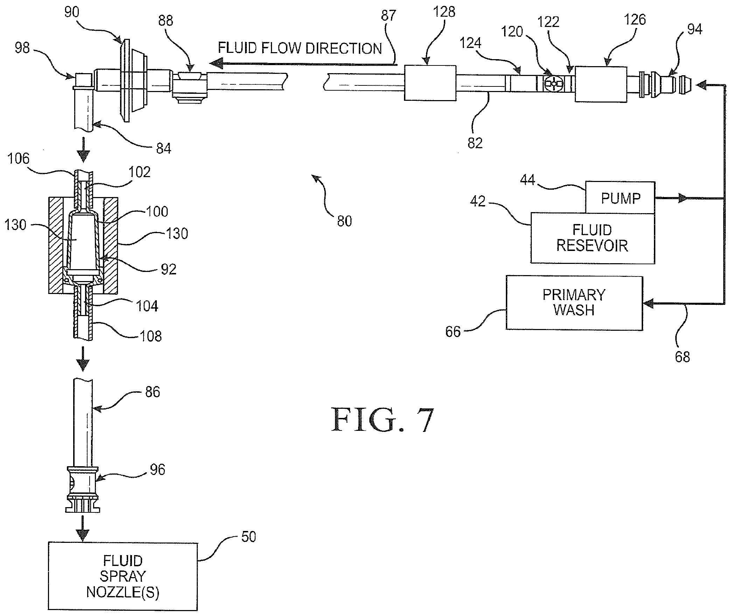

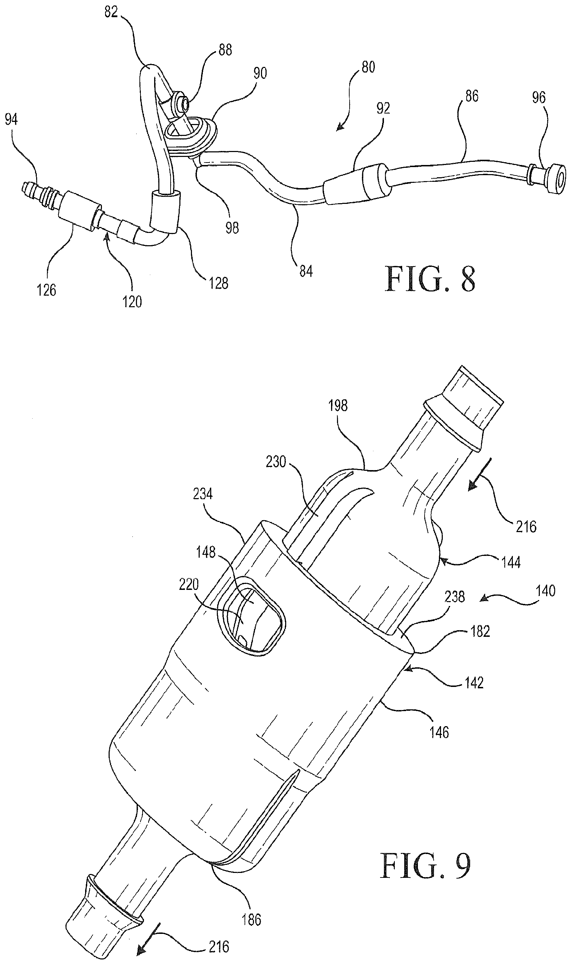

Another version of a jumper hose assembly, or washer system, is illustrated at 80 in Fig. 7, and is connected at one (upstream) end to the fluid reservoir 42 via the pump 44. The assembly includes suitable lengths of fluid supply tubing 82, 84 and 86 for connection at its other (downstream) end to one or more fluid spray nozzles 50, the direction of fluid flow being in the direction of arrow 87. One or more check valves 88 may be incorporated in the system 80, and in this case a valve is shown as being located in tube, or hose 82, upstream of a grommet 90 which positions and secures the assembly 80 in the vehicle. This system is shown as including an in-line filter 92 which in this embodiment is located between, and connects, tubes 84 and 86 downstream from the check valve 88, to screen particulate material from the fluid and thus prevent clogging of the nozzle(s) 50 to thereby prolong system life. The system includes one or more connectors, such as a quick-connect unit 94 to connect the tubing 82 to the pump 44, quick-connect unit 96 to connect tubing 86 to the nozzle(s) 50, and elbow connector 98 to join the tubing 82 to the tubing 84. The filter 92 incorporates a housing 100 having inlet and outlet axial tubular extensions or conduits 102 and 104 which receive corresponding ends 106 and 108 of tubes 84 and 86, respectively, to join the tubes and to secure the filter in the system 80. In this embodiment, the system is shown to incorporate at least one mounting barb 120 secured on tube 82 by tape 122 and 124, as well as two cylindrical foam protectors 126 and 128 located on the tubing. The in-line filter 92 illustrated in Fig. 7 is a conventional fluid filter having a tapered housing 100 which receives a filter element 132 and is surrounded by a third foam protector 130. It will be understood that mounting barbs 120 may be positioned as needed and that foam protectors may be located on the filter and elsewhere on the jumper hose as required for a particular automotive application. The assembly of Fig.7 may be configured as illustrated in Fig. 8 for one particular automotive application, but it will be understood that the assembly 80 may be variously configured and correspondingly sized for other applications.

As previously described, and as will be further described in detail below, a pressure control device (PCD) may be incorporated as a separate component anywhere in the system 80, but should not be in tube 68 where it would restrict flow to spray nozzles in the primary wash area 66, which may be either the front windscreen nozzles or the headlamp nozzles of a vehicle and which are connected to pump 44 by way of tubing 68. Alternatively, the pressure control device may be integrated into any of the jumper hose components mentioned above, such as the nozzle 50, the check valve 88, the filter 92, or one of the connectors 94, 96 or 98. Furthermore, two or more of the foregoing component types could be incorporated into a single housing, such as a nozzle integrally containing both a PCD and a check valve, or a filter integrally containing a PCD and a check valve.

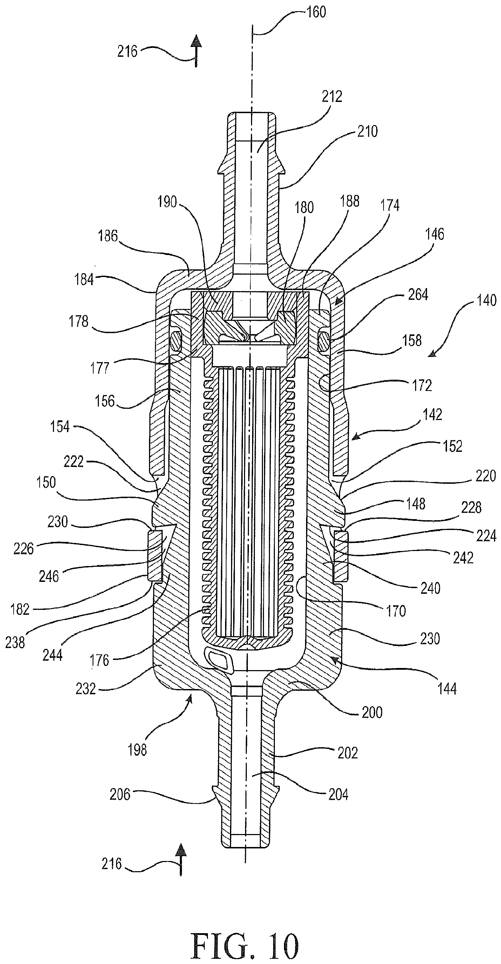

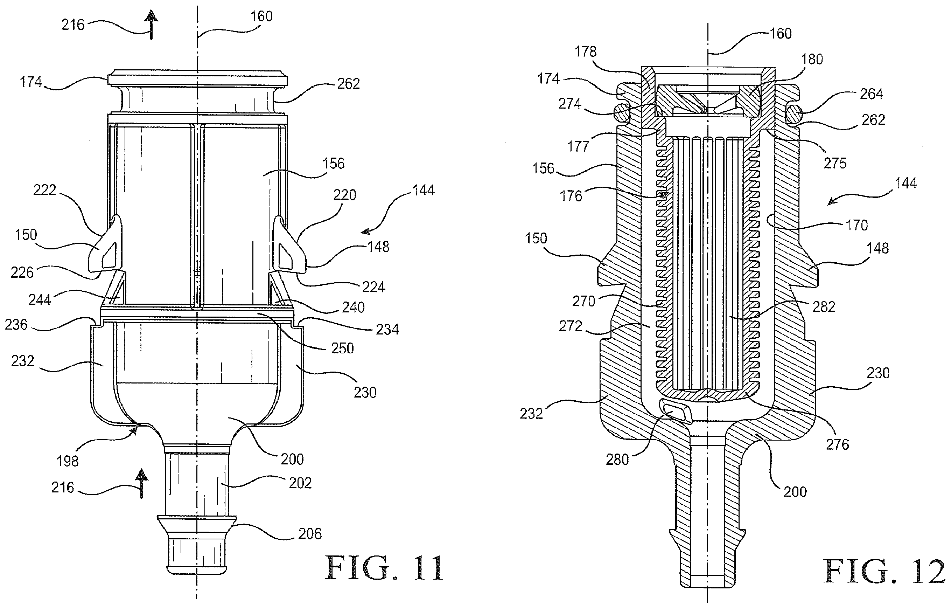

However, as illustrated in the side perspective view of Fig. 9, the cross-section of Fig. 10, the partial side elevation of Fig. 11 and the cross-section of Fig. 11 shown in Fig. 12, in a preferred form of the present invention a jumper hose assembly, for example an assembly of the type illustrated in Figs. 6-8, incorporates as the filter element a combination in-line filter and pressure control device 140. In this embodiment, the filter device incorporates a two-part housing 142 having an inner body portion 144 and an outer body portion 146, which are assembled by telescoping the outer portion 142 over the inner portion 144. These components snap together and are secured by opposed detents 148 and 150 protruding from the side wall of the inner body portion 144 to engage corresponding receiver apertures 152 and 154 in the side wall of the outer body portion 146 of the housing 142. The outer body portion is best illustrated in perspective in Fig. 9 and in cross-section in Fig. 10, while the inner body portion 144 is best illustrated in the side elevation of Fig. 11 and in cross-section in Figs. 10 and 12. The inner and outer housing body portions 144 and 146 have generally cylindrical walls 156 and 158, respectively, surrounding a longitudinal axis 160. These walls define cylindrical interior chambers 170 and 172, respectively.

The interior chamber 170 (of the inner body portion 144) is open at its downstream end 174 and has an inner diameter sufficient to receive a generally cylindrical filter element 176 through the open end. As illustrated, the downstream end, or outlet 177 of the filter element incorporates a cylindrical extension 178 which receives a pressure control device 180 and positions it immediately below and coaxial with the filter. The interior chamber 172 of the outer body portion 146 has an open upstream end 182 and a diameter sufficient to snugly receive the wall 156 of the inner body portion 144 so that the inner body portion telescopes into the outer body portion. As illustrated in Fig. 10, the downstream end 184 of the outer body portion is partially closed by a substantially radially-extending end wall 186, the interior surface of which abuts the downstream end 188 of the filter element extension to secure the filter in the interior of the housing 142 when the housing is assembled. A spacer 190 is positioned between the inner surface of the end wall 186 and the PCD 180 to provide a secure fit for the PCD.

The upstream end 198 of the inner housing portion 144 is closed by a substantially radially-extending wall 200 which incorporates an axially-extending upstream tubular extension or conduit 202 defining an interior inlet fluid passageway 204 leading to the interior chamber or cavity 170. The exterior surface of the conduit 202 receives a fluid supply tube or hose, such as tube 84 in the example of Fig. 7, and carries a barb 206 on its outer surface to engage the interior of the tube 84 to secure the filter 140 in the fluid system. Similarly, the downstream end wall 186 of the outer housing portion incorporates an axially-extending downstream tubular extension or conduit 210 defining an interior fluid passageway 212 leading from the interior chamber or cavity 172 of the outer body portion 146. The exterior surface of the conduit 210 receives a fluid supply tube, such as tube 86 in the example of Fig. 7, and carries a barb 214 on its outer surface to engage the interior of the tube 86 to secure the filter 140 in the fluid system. The direction of fluid flow through the filter element 140 is indicated in the various figures by the arrows 216.

Fig. 11 is a side elevation view of the inner body portion 144 that is partially visible in Fig. 9 and is shown in cross-section in Fig. 10, wherein similar elements are similarly numbered. As illustrated, the generally cylindrical side wall 156 of body portion 144 carries the radially outwardly extending detents 148, 150. As viewed in Fig. 11, these detents are in the form of protrusions having planar outwardly and downwardly (upstream) sloped top contact surfaces 220 and 222, respectively, terminating in substantially radially inwardly extending shoulder surfaces 224 and 226, respectively, which slope slightly upwardly and inwardly, as best seen in the cross-section of Fig. 10. The contact surfaces 220 and 222 slope upwardly, or upstream, as viewed in Fig. 9 and upon assembly of the inner and outer body portions engage the outer body wall 158 to facilitate telescoping of the body portions. The detents snap out through the corresponding receiver apertures 152 and 154 upon completion of the assembly so that the surfaces 224 and 226 engage the corresponding aperture edges 228 and 230. The upward slopes of the shoulder surfaces 224 and 226 secure the inner and outer body portions in the assembled condition.

The upstream end 198 (the lower end as viewed in Fig. 10) of inner body portion 144 includes first and second radially outwardly protruding longitudinal, or axially-extending, ridges 230 and 232 that are axially aligned with the detents 148 and 150, respectively, and incorporate radially inwardly extending shoulders 234 and 236. These shoulders engage the bottom (as viewed in Fig. 10), or upstream circumferential rim 238 of the open end 182 of outer housing body portion 146 when the body portions are telescoped together to position these portions longitudinally with respect to each other. Between the ridge 230 and the detent 148 on body portion 144 is a triangular projection 240 which engages a corresponding groove 242 on the interior surface of the outer body portion 142 to align the detent with its corresponding aperture 154. Similarly, and for the same purpose, a second triangular projection 244 on body portion 144 between ridge 232 and detent 150 engages a corresponding groove 246 on the interior surface of body portion 144.

The inner body portion 144 incorporates an outer circumferential sealing ring near its upstream end that engages the inner surface of chamber 172 at rim 238 of the outer body portion 146. In addition, as illustrated in Fig. 11 and in the cross-sectional view of the inner body portion 144 in Figs. 10 and 12, the open downstream end 260 of the cylindrical inner body portion 144 incorporates a sealing groove 262 which receives an O-ring 264 These features cooperate to provide a water-tight seal between the inner and outer body portions 144 and 146 when the in-line filter assembly 140 is completely assembled, as illustrated in Fig. 10.

As best seen in Fig. 12, the filter element 176 is a conventional, off-the-shelf fluid filter cartridge that incorporates a perforated cylindrical side wall 270 that is of a smaller diameter than, and is coaxial with, the inner cavity 170 of the inner body 144 to provide an annular fluid passageway 272 around the outside of the filter element. The filter element extension 178 is stepped radially outwardly from side wall 270, as indicated at inner radial shoulder 274 and outer radial shoulder 275, and has a larger diameter than the side wall 270. As illustrated, the outer diameter of the extension is substantially the same as the diameter of cavity 170 to position the downstream end 177 of the filter element coaxially within the side wall 156. The upstream end 276 of the filter element is positioned coaxially within the inner body 144 by a plurality, for example three, of generally triangular spacers 280 molded in the interior of end wall 200 of the body portion 144. When the filter element is inserted in cavity 170, the end 276 engages the spacers 280 to space the filter element from the side and end walls to extend the fluid passageway 272 around the end of the filter element when the filter 140 is assembled. This provides a continuous fluid flow path through the filter element 140 by way of inlet passageway 204 to the annular passageway 272, through the perforated side wall 270 and into the interior cavity 282 of the filter element 176, and then out through the downstream end, or outlet 177 of the filter cartridge, through the pressure control device 180 and spacer 190 to the outlet passageway 212. The filter element is selected (or designed) so that its perforated side wall incorporates a mesh size, or openings or apertures having a nominal maximum size, or diameter, that is smaller than the size of the smallest opening of the downstream nozzle supplied by the filtered fluid.

As noted above, an automotive washer system such as that shown at 40 in Fig. 6 or at 80 in Fig. 7 often has multiple branches which supply fluid not only to high-usage surfaces such as windshields and rear windows 66, but also to one or more low-flow devices such as camera or other sensor lenses 50. A multi-branch system may be supplied with a dual outlet pump or with two or more similar single or dual outlet pumps. Consequently, when fluid is demanded at a location such as a sensor where a lower target flowrate is desired to conserve fluid, the pump may be oversized for that particular application and may generate more pressure than may be necessary for cleaning. This higher pressure may result in a fluid flow rate to the low-flow applications that is too high, resulting in excessive fluid consumption. Since the fluid supply in a vehicle is limited, conservation of fluid is desirable, and becomes critical when a vehicle contains multiple nozzles, such as when one or more sensors or objective lenses on a vehicle are to be cleaned. In accordance with the present invention, therefore, a lens cleaning system for automotive applications is provided wherein a fluid spray is supplied from a single pressurized fluid source to multiple nozzles having different fluid flow requirements.

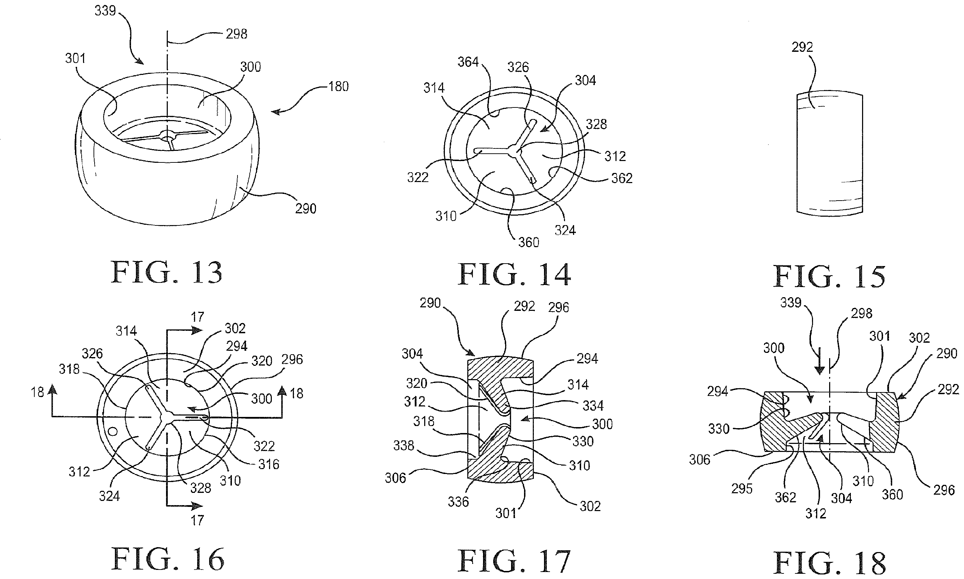

To provide nozzle flow rates that are sufficient to adequately clean a lens without wasting fluid, the pressure control device (PCD) or flow regulator 180 incorporated in filter element 140 may take any of several forms, but in its preferred form, illustrated in Figs. 13-18, incorporates a toroidal body portion 290 formed by an annular wall 292 having a substantially cylindrical upper inner surface 294, a substantially cylindrical lower inner surface 295, and a convex or bulging outer wall surface 296 surrounding and coaxial with an axis 298 to form a central through passageway 300. The body portion is open at its top 301, as viewed in Figs. 13 and 18, and has an annular upper flat rim, or surface 302. The bottom of the toroid 290 is also open, as illustrated at 304, and has an annular flat bottom surface 306. Midway along the axial length of body portion 290 are preferably three inwardly-extending, flexible flaps, or tabs 310, 312 and 314 which extend inwardly from wall 292 between the upper and lower inner wall surfaces 294 and 295. The tabs are generally triangular in shape, as illustrated in Figs. 14 and 16, and have arcuate bases 316, 318 and 320, respectively, where they meet the cylindrical side walls. The tabs are spaced apart around the circumference of the inner wall 294 with the edges of adjacent tabs being spaced apart to form three radially-extending slots 322, 324 and 326 extending outwardly from a central, or axial opening 328 toward the inner surfaces of wall 292, with the slots being wide enough to permit easy flexing of the tabs. As illustrated in Figs. 17 and 18, the tabs preferably are tapered inwardly in cross-section from their respective arcuate bases to respective central tips 330, 332 and 334 that are spaced around and define the central opening 328. The tabs intersect the upper wall surface portion 294 at an acute angle at an upper intersection 336, to form an upwardly-sloped rest position, and intersect the lower wall surface 295 at an obtuse angle at lower intersection 338.

The pressure control device 180 is constructed of an elastomeric material, such as TPV, so that the tabs 310, 312 and 314 are flexible and are configured to have a predictable deformation in response to fluid pressure and flow. The tabs are shown in a rest or fully open state in the Figures, so that the slots and the central aperture, or opening, combine to provide a maximum passage area for fluid passing through the device in the direction of arrow 339 (Figs. 13 and 18). The tabs respond to a selected fluid flow to start to flex downwardly and inwardly as viewed in Figs. 17 and 18, with increased flow gradually closing the slots and reducing the diameter of the central opening so that at a predetermined flow and pressure the tabs close the fluid passage area to a predetermined minimum, thereby limiting the flow rate through the PCD to a preset maximum, even with increased pressure.

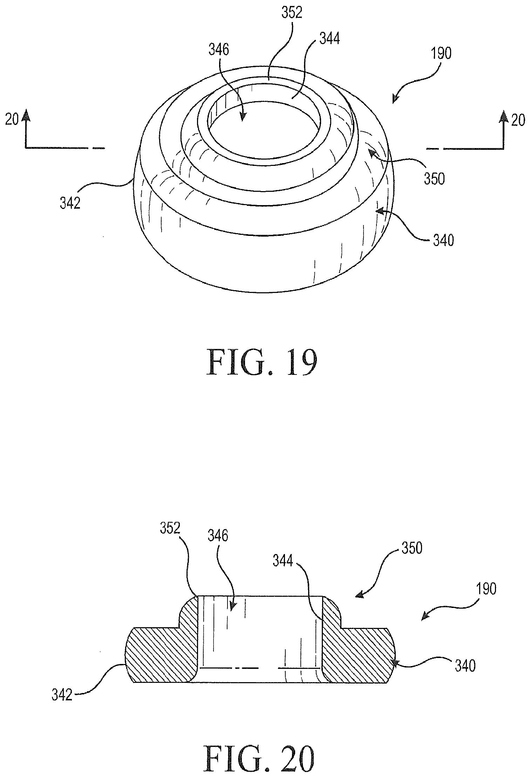

As illustrated in Figs. 10 and 12, the outer diameter of the pressure control device 180 is selected to fit snugly into the filter cartridge extension 178 when it is mounted in the combination filter and PCD 140. The PCD is inserted into the extension so that its upper flat rim surface engages the inner shoulder 274 formed by filter cartridge extension 178 to thereby align its central passageway 300 with the filter cartridge outlet 177. The PCD 180 is secured in place by an rigid plastic spacer 190, which snugly fits into the filter cartridge extension 178 downstream from the PCD and which acts to regulate the flexing of the PCD tabs. As illustrated in Figs. 19 and 20, the spacer has a cylindrical body portion 340 with an outwardly-curved outer side wall surface 342 having a diameter equal to or slightly larger than the inner diameter of the extension 178, and having an inner cylindrical wall surface 344 forming a central passage 346 that aligns with the filter cartridge outlet 177 and the central passageway 300 of the PCD 180. The upstream end 350 of the spacer incorporates an upstanding annular ring or bumper 352 having an outer wall portion 354 which engages the lower wall 295 and a top surface 356 which engages the peripheral bottom portions 360, 362, 364 of the flexible tabs adjacent the wall 295, as illustrated. The selection of the characteristics of the material used to form the PCD, the dimensions of the tabs 310, 312 and 314 and thus the dimensions of the slots between the tabs and/or the thickness of the flexible tabs, and the dimensions of the spacer cooperate to determine the response of the PCD to the fluid flow and the selected pressure/flow point at which the tabs reach a position in which flow is substantially restricted to the area of the central aperture. The spacer is a key element in controlling the flow through the PCD, for the rigid upper annular ring 352 of the spacer supports the periphery of the flexible tabs to limit the deformation of the PCD, with the size of the spacer being selected to provide the desired range of fluid flow through the PCD. It will be understood that the range of fluid flow through with filter element can be easily modified by replacing a spacer of one size for a spacer of a different size, allowing modification of the available range with only a minimal change in one of the filter element components. As previously described, when the filter element 140 is assembled, the upstream end of the PCD engages the filter cartridge, the upstream end of the spacer engages the downstream end of the PCD, and the end wall 186 of outer body portion 142 engages the downstream end of the PCD, with the detents securing the pieces securely together in a water-tight assembly.

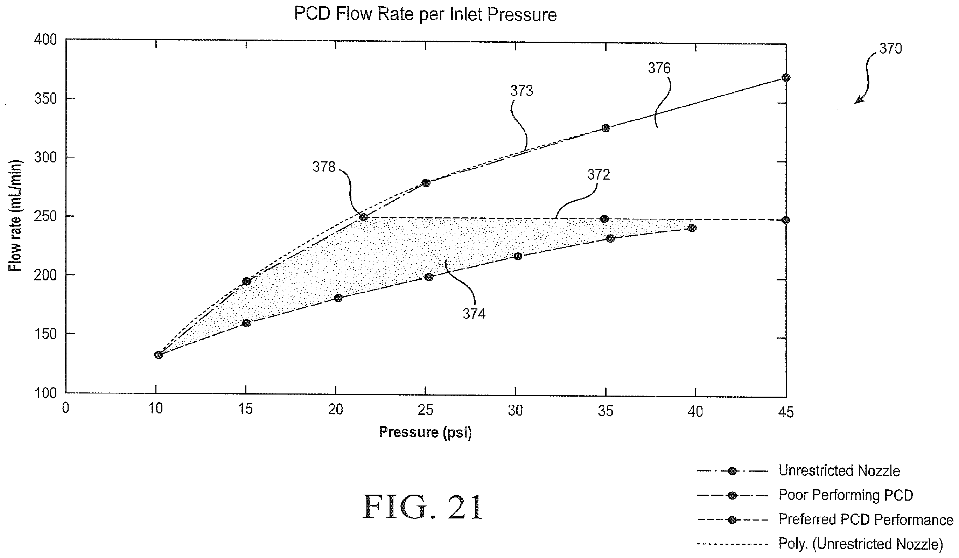

Fluid flow through the filter element of the present invention and thus to the fluidic spray device or devices 50 connected to a jumper hose assembly of the type generally described herein, is controlled by the pressure control device 180 described above. In use, the flexible tabs or flaps bend axially downstream (downwardly as viewed in Figs. 13 and 18) under the pressure of fluid flowing from a pump source to the spray device or devices. As illustrated by the graph 370 of Fig. 21 the operation of the PCD is characterized by a preferred flow rate versus pressure curve 372. With this device, then, at any selected pressure P, the flow rate Q₁ is illustrated by curve 372 as being less than or equal to the flow rate Q₂ of a fixed diameter orifice, which is illustrated by curve 373. The flow through a fixed diameter orifice is characterized by the equation Q = kP^{0.5}, where Q is fluid flow rate, P is fluid pressure, and k is a coefficient which varies with the orifice area. In the pressure control device 180, the orifice area through which the fluid flows is the total area of the radial slots 322, 324 and 326 and the central opening 328, and because of the flexibility of the tabs this total area decreases as the flow pressure and flow rate both increase. At the flow rate and the pressure required to produce a vortex in the connected fluidic nozzles to operate, indicated by point 378 on curve 372, the orifice area has decreased to a predetermined minimum size. As illustrated by graph 370, if the pressure control device 180 reacts to pump pressure to reduce the flow rate too much, the flow to the nozzles will be insufficient to produce a satisfactory spray characteristic, as indicated at region 374, resulting in under-performing cleaning. On the other hand, if the pressure control device 180 reacts to pump pressure to allow too much fluid flow at higher pump pressures, the flow to the nozzles will be too great to produce a satisfactory spray characteristic, resulting not only in under-performing cleaning, but in excessive water usage, as indicated at region 376. This latter result is essentially the same as using an unrestricted nozzle, and is most unsatisfactory.

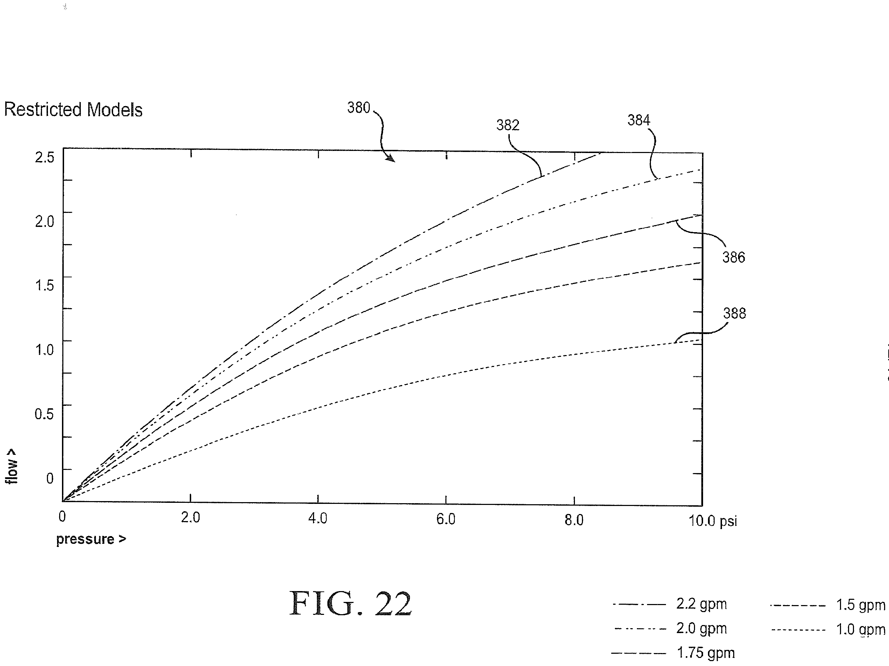

For comparison purposes, Fig. 22 illustrates in graph 380 a series of curves 382, 384, 386 and 388 representing the flow rate versus pressure performance of fluid flow to a nozzle through simple flow restrictors such as various sizes of O-rings in the flow path. Such restrictors produce significantly higher flow rates (gallons per minute) than the present invention, in which the flow rate is mL/min.

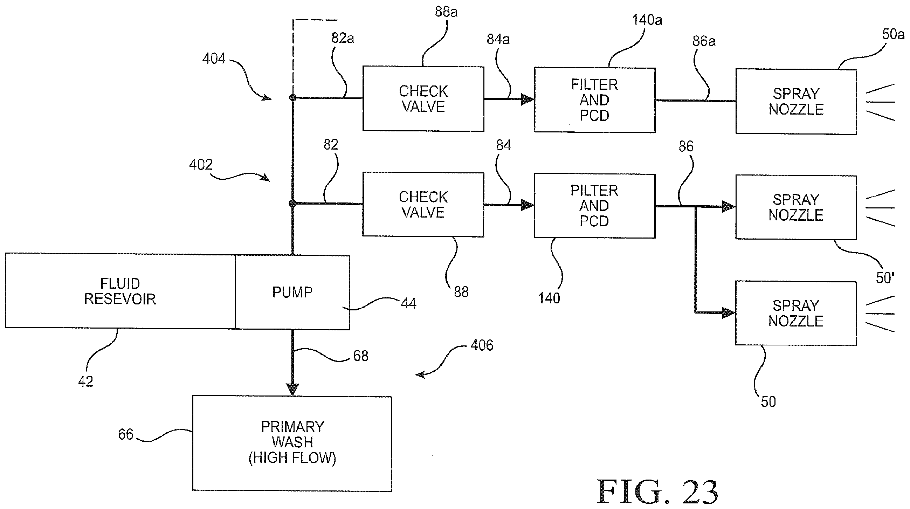

Fig. 23 illustrates.....Please provide additional explanation of what Fig 23 shows - and how it differs from invention.

According to the present invention, then, an automotive wash system containing a fluidic, shear, or jet nozzle for washing sensors or lens components for automotive camera, LIDAR, LEDAR, radar, other optical sensor devices as well as rear glazing, side view mirror, headlamp, and the like with a supply flow rate of between 1 and 2500mL/min with a supply pressure of between 1 and 80psi is fluidly connected through a pressure control device (PCD) or flow regulator, in such a way that flow to the nozzle does not exceed 90% of the nominal flow rate without the PCD for supply pressures between 30 and 60psi; if desired, the PCD may be selected to limit the system to a lower target flowrate for the same pressure range. As discussed above, in a preferred washer system, a check valve is provided that is less than about 24 inches from a nozzle, and even better, is less than 12 inches away, to insure proper operation of the system. As illustrated in Fig. 24, a washing system 400 may incorporate multiple low flow branches 402, 404, as well as one or more conventional, or high-flow branches 406. The high-flow branches lead to the conventional primary wash areas, such as wind shields, rear windows and headlights, while each of the low-flow branches may incorporate a jumper hose incorporating corresponding check valves 88, 88a, etc., fluidly connected in series with filter and PCD elements 140, 140a, etc., by way of suitable lengths of hosing 82, 84, 86 and 82a, 84a and 86a, etc. each sized and configured for its particular application. As illustrated, each branch may be connected to one or more parallel spray nozzles 50, 50', etc., which preferably are fluidic or vortex-generating nozzles of known configuration and characteristics.

Having described preferred embodiments of a new and improved lens cleaning system and method, it is believed that other modifications, variations and changes will be suggested to those skilled in the art in view of the teachings set forth herein. For example, the pressure control device is illustrated in its preferred form as a part of a jumper hose filter element; however, it will be understood the pressure device as illustrated may be a stand-alone component included in a jumper hose, or may be incorporated with a component other than a filter, such as with a connector, a check valve, or even a nozzle. It is therefore to be understood that all such variations, modifications and changes are believed to fall within the scope of the appended claims which define the present invention.

## Claims

1. An automotive wash system containing a fluidic, shear, or jet nozzle for washing sensors or lens components for automotive devices as well as glazing, mirrors and headlamps, comprising:
a source of fluid (42, 44) capable of providing a supply fluid flow rate of between 1 and 2500ml/min with a supply pressure of between 1 and 80psi;
a spray nozzle (50);
a pressure control device (180) fluidly connected between said source of fluid and said nozzle in such a way that flow to the nozzle does not exceed 90% of the nominal flow rate without the pressure control device for supply pressures between 30 and 60psi, or with a lower target flowrate for the same pressure range;
wherein the pressure control device is an elastomeric body (290) incorporating multiple flexible tabs (310, 312, 314) in a fluid flow path (300) through the body and wherein the flexible tabs are responsive to flow rate and pressure to vary the area of the flow path.

2. The system of claim 1 further including a check valve (88) fluidly connected in series with said pressure control device in said flow path between said fluid source and said nozzle.

3. The system of claim 2 further including a fluid filter (176) fluidly connected in series with said check valve and said pressure control device between said source of fluid and said nozzle.

4. The system of claim 3, wherein said nozzle comprises multiple nozzles (50, 50') connected in parallel.

5. The system of claim 3, wherein said fluid filter incorporates said pressure control device to form a combination filter and pressure control device (140).

6. The system of claim 1, further including a combination filter and pressure control device (140), comprising:
a housing (142) having an inlet passageway (204) at an upstream end and an outlet passageway (212) at a downstream end (184); and
a filter cartridge (176) in the filter housing and having an extension (178) which engages said housing to position the filter cartridge in the housing and which receives said pressure control device.

7. The system of Claim 6, wherein said pressure control device further includes:
a toroidal body portion (290) formed by an annular wall (292) open at its top (301) and its bottom (304) and having annular upper (302) and bottom (306) flat surfaces, substantially cylindrical upper (294) and lower (295) inner surfaces, and a convex outer wall surface (296) surrounding and coaxial with an axis (298) to form a central through passageway (300);
at least three inwardly-extending, flexible tabs (310, 312 and 314) extending inwardly from said wall (292) between the upper and lower inner wall surfaces (294, 295) and into said through passageway;
said tabs being spaced apart around the circumference of the inner wall (294) to form spaced, radially-extending slots (322, 324, 326) and a central opening (328); and said tabs at rest forming a maximum fluid flow area through said slots and central opening and being responsive to fluid flow (339) through said passageway to reduce said fluid flow area to limit the flow rate of the fluid.

8. The system of Claim 7, wherein said tabs are generally triangular in shape and have arcuate bases (316, 318, 320), respectively, where they meet the cylindrical side walls, with the edges of adjacent tabs being spaced apart to form said slots.

9. The system of Claim 8, wherein the tabs preferably are tapered inwardly in cross-section from their respective arcuate bases to respective central tips (330, 332, 334) that are spaced around and define said central opening.

10. The system of Claim 9, wherein the tabs intersect the upper wall surface portion (294) at acute angles at upper intersections (330) and intersect the lower wall surface portion (295) at obtuse angles at lower intersections (332) to form an upwardly-sloped tab rest position wherein the slots and the central opening combine to provide said maximum fluid flow passage area for fluid passing through the device.

11. The system of Claim 10, wherein the intersection of said tabs with said side walls is substantially midway along the axis of the fluid flow control device.

12. The system of Claim 11, wherein said housing has an inner portion and an outer portion which telescopes over said inner portion, said housing including fasteners (148, 152 and 150, 154) for securing the halves together to enclose said filter cartridge and said pressure control device.

13. The system of Claim 12, wherein said inner housing incorporates inner spacers (280) for positioning said filter cartridge in the housing, and incorporates outer ridges (230, 232) for positioning the inner housing with respect to the outer housing.

14. The system of Claim 13, further including an annular spacer (190) located in said filter cartridge extension and engaging a lower surface (360) of said pressure control device, said spacer engaging an end wall (186) of said outer housing, said housing when assembled securing the filter cartridge, the pressure control device, and the spacer in axial alignment within the housing to provide a flow path through the combination filter and pressure control device that is controlled by said flexible tabs.

15. The system of claim 14, wherein said pressure control device is elastomeric and said spacer is rigid and sized to engage said tabs to regulate the flexing of the tabs in response to fluid flow.

## Patentansprüche

1. Automobilwaschanlage, die eine Fluid-, Scher- oder Strahldüse zum Waschen von Sensoren oder Linsenkomponenten für Automobilvorrichtungen sowie von Verglasungen, Spiegeln und Scheinwerfern enthält, umfassend:
eine Quelle von Fluid (42, 44), die in der Lage ist, eine Versorgungsfluid-Strömungsrate von zwischen 1 und 2500 ml/min mit einem Versorgungsdruck von zwischen 1 und 80 psi bereitzustellen;
eine Sprühdüse (50);
eine Druck-Steuer- bzw. Regelvorrichtung (180), die fluidisch zwischen der Quelle von Fluid und der Düse in einer derartigen Weise verbunden ist, dass eine Strömung zu der Düse ohne die Druck-Steuer- bzw. Regelvorrichtung für Versorgungsdrücke zwischen 30 und 60 psi, oder mit einer geringeren Zielströmungsrate für den gleichen Druckbereich, 90 % der Nennströmungsrate nicht übersteigt;
wobei die Druck-Steuer- bzw. Regelvorrichtung ein elastomerer Körper (290) ist, der mehrere flexible Laschen (310, 312, 314) in einem Fluidströmungsweg (300) durch den Körper hindurch eingliedert, und wobei die flexiblen Laschen auf Strömungsrate und Druck reagieren, um die Fläche des Strömungswegs zu variieren.

2. System nach Anspruch 1, das ferner ein Rückschlagventil (88) umfasst, das fluidisch mit der Druck-Steuer- bzw. Regelvorrichtung in dem Strömungsweg zwischen der Fluidquelle und der Düse in Reihe geschaltet ist.

3. System nach Anspruch 2, das ferner einen Fluidfilter (176) umfasst, der fluidisch mit dem Rückschlagventil und der Druck-Steuer- bzw. Regelvorrichtung zwischen der Quelle von Fluid und der Düse in Reihe geschaltet ist.

4. System nach Anspruch 3, wobei die Düse mehrere Düsen (50, 50') umfasst, die parallelgeschaltet sind.

5. System nach Anspruch 3, wobei der Fluidfilter die Druck-Steuer- bzw.
Regelvorrichtung eingliedert, um eine kombinierte Filter- und Druck-Steuer- bzw. Regelvorrichtung (140) zu bilden.

6. System nach Anspruch 1, das ferner eine kombinierte Filter- und Druck-Steuer- bzw. Regelvorrichtung (140) umfasst, die Folgendes umfasst:
ein Gehäuse (142), das einen Einlasskanal (204) an einem stromaufwärtigen Ende und einen Auslasskanal (212) an einem stromabwärtigen Ende (184) aufweist; und
eine Filterpatrone (176) in dem Filtergehäuse und eine Erweiterung (178) aufweisend, die in das Gehäuse eingreift, um die Filterpatrone in dem Gehäuse zu positionieren, und die die Druck-Steuer- bzw. Regelvorrichtung aufnimmt.

7. System nach Anspruch 6, wobei die Druck-Steuer- bzw. Regelvorrichtung ferner Folgendes umfasst:
einen toroidalen Körperabschnitt (290), der von einer ringförmigen Wand (292) gebildet wird, der an seiner Oberseite (301) und seiner Unterseite (304) offen ist und ringförmige obere (302) und untere (306) flache Flächen, im Wesentlichen zylindrische obere (294) und untere (295) Innenflächen und eine konvexe Außenwandfläche (296) aufweist, die eine Achse (298) umgibt und koaxial dazu ist, um einen zentralen Durchgangskanal (300) zu bilden;
mindestens drei sich nach innen erstreckende, flexible Laschen (310, 312 und 314), die sich von der Wand (292) zwischen den oberen und unteren Innenwandflächen (294, 295) nach innen und in den Durchgangskanal hinein erstrecken;
wobei die Laschen um den Umfang der Innenwand (294) herum beabstandet sind, um beabstandete, sich radial erstreckende Schlitze (322, 324, 326) und eine zentrale Öffnung (328) zu bilden; und wobei die Laschen in Ruhe eine maximale Fluidströmungsfläche durch die Schlitze und die zentrale Öffnung hindurch bilden und auf eine Fluidströmung (339) durch den Kanal hindurch reagieren, um die Fluidströmungsfläche zu reduzieren, um die Strömungsrate des Fluids zu begrenzen.

8. System nach Anspruch 7, wobei die Laschen im Allgemeinen dreieckig geformt sind und jeweils bogenförmige Basen (316, 318, 320) aufweisen, an denen sie auf die zylindrischen Seitenwände treffen, wobei die Ränder benachbarter Laschen beabstandet sind, um die Schlitze zu bilden.

9. System nach Anspruch 8, wobei sich die Laschen im Querschnitt von ihren jeweiligen bogenförmigen Basen hin zu jeweiligen zentralen Spitzen (330, 332, 334), die ringsum beabstandet sind und die zentrale Öffnung definieren, vorzugsweise nach innen verjüngen.

10. System nach Anspruch 9, wobei die Laschen den oberen Wandflächenabschnitt (294) in spitzen Winkeln an oberen Schnittpunkten (330) schneiden und den unteren Wandflächenabschnitt (295) in stumpfen Winkeln an unteren Schnittpunkten (332) schneiden, um eine nach oben geneigte Laschenruheposition zu bilden, wobei sich die Schlitze und die zentrale Öffnung kombinieren, um die maximale Fluidströmungsdurchgangsfläche für Fluid bereitzustellen, das sich durch die Vorrichtung hindurchbewegt.

11. System nach Anspruch 10, wobei der Schnittpunkt der Laschen mit den Seitenwänden im Wesentlichen auf halbem Weg entlang der Achse der Fluidströmungs-Steuer- bzw. Regelvorrichtung liegt.

12. System nach Anspruch 11, wobei das Gehäuse einen Innenabschnitt und einen Außenabschnitt, der sich teleskopartig über den Innenabschnitt schiebt, aufweist, wobei das Gehäuse Verschlüsse (148, 152 und 150, 154) zum Zusammenhalten der Hälften umfasst, um die Filterpatrone und die Druck-Steuer- bzw. Regelvorrichtung einzuschließen.

13. System nach Anspruch 12, wobei das Innengehäuse innere Abstandshalter (280) zum Positionieren der Filterpatrone in dem Gehäuse eingliedert und äußere Stege (230, 232) zum Positionieren des Innengehäuses in Bezug auf das Außengehäuse eingliedert.

14. System nach Anspruch 13, das ferner einen ringförmigen Abstandshalter (190) umfasst, der sich in der Filterpatronenerweiterung befindet und in eine untere Fläche (360) der Druck-Steuer- bzw. Regelvorrichtung eingreift, wobei der Abstandshalter in eine Stirnwand (186) des Außengehäuses eingreift, wobei das Gehäuse, wenn zusammengesetzt, die Filterpatrone, die Druck-Steuer- bzw. Regelvorrichtung und den Abstandshalter in axialer Ausrichtung innerhalb des Gehäuses hält, um einen Strömungsweg durch die kombinierte Filter- und Druck-Steuer- bzw. Regelvorrichtung hindurch bereitzustellen, der mittels der flexiblen Laschen gesteuert bzw. geregelt wird.

15. System nach Anspruch 14, wobei die Druck-Steuer- bzw. Regelvorrichtung elastomer ist und der Abstandshalter starr und so bemessen ist, dass er in die Laschen eingreift, um das Biegen der Laschen in Reaktion auf eine Fluidströmung zu regulieren.

## Revendications

1. Système de lavage automobile contenant une buse fluidique, par cisaillement ou par jet pour laver des capteurs ou des composants de lentilles pour des dispositifs automobiles ainsi que des vitres, miroirs et phares, comportant :
une source de fluide (42, 44) capable de fournir un débit de fluide d'alimentation compris entre 1 ml/mn et 2 500 ml/mn avec une pression d'alimentation comprise entre 1 psi et 80 psi ;
une buse de pulvérisation (50) ;
un dispositif de régulation de pression (180) relié fluidiquement entre ladite source de fluide et ladite buse, de sorte qu'un écoulement vers la buse ne dépasse pas 90 % du débit nominal sans le dispositif de régulation de pression pour des pressions d'alimentation comprises entre 30 psi et 60 psi ou avec un débit cible inférieur pour la même plage de pressions ;
dans lequel le dispositif de régulation de pression est un corps élastomère (290) incorporant de multiples rabats flexibles (310, 312, 314) dans un trajet d'écoulement fluidique (300) à travers le corps et dans lequel les rabats flexibles réagissent au débit et à la pression pour faire varier la zone du trajet d'écoulement.

2. Système selon la revendication 1, incluant en outre un clapet anti-retour (88) relié fluidiquement en série avec ledit dispositif de régulation de pression dans ledit trajet d'écoulement entre ladite source de fluide et ladite buse.

3. Système selon la revendication 2, incluant en outre un filtre de fluide (176) relié fluidiquement en série avec ledit clapet anti-retour et ledit dispositif de régulation de pression entre ladite source de fluide et ladite buse.

4. Système selon la revendication 3, dans lequel ladite buse comporte de multiples buses (50, 50') reliées en parallèle.

5. Système selon la revendication 3, dans lequel ledit filtre de fluide incorpore ledit dispositif de régulation de pression pour former un filtre de combinaison et un dispositif de régulation de pression (140).

6. Système selon la revendication 1, incluant en outre un filtre de combinaison et un dispositif de régulation de pression (140), comportant :
un logement (142) ayant un passage d'entrée (204) à une extrémité amont et un passage de sortie (212) à une extrémité aval (184) ; et
un cartouche de filtre (176) dans le logement de filtre et ayant une extension (178) qui met en prise ledit logement pour positionner la cartouche de filtre dans le logement et qui reçoit ledit dispositif de régulation de pression.

7. Système selon la revendication 6, dans lequel ledit dispositif de régulation de pression inclut en outre :
une portion de corps toroïdal (290) formée par une paroi annulaire (292) ouverte au niveau de son dessus (301) et de son fond (304) et ayant des surfaces plates supérieure (302) et inférieure (306) annulaires, des surfaces internes supérieure (294) et inférieure (295) sensiblement cylindriques et une surface de paroi externe convexe (296) entourant un axe (298) et coaxiale avec celui-ci pour former un passage traversant central (300) ;
au moins trois rabats flexibles (310, 312 et 314) à extension interne, s'étendant vers l'intérieur à partir de ladite paroi (292) entre les surfaces de paroi interne supérieure et inférieure (294, 295) et dans ledit passage traversant ;
lesdits rabats étant espacés autour de la circonférence de la paroi interne (294) pour former des fentes à extension radiale (322, 324, 326) espacées et une ouverture centrale (328) ; et lesdits rabats au repos formant une zone d'écoulement de fluide maximum à travers lesdites fentes et l'ouverture centrale et étant réactifs à un écoulement de fluide (339) à travers ledit passage pour réduire ladite zone d'écoulement de fluide pour limiter le débit du fluide.

8. Système selon la revendication 7, dans lequel lesdits rabats ont généralement une forme triangulaire et ont respectivement des bases arquées (316, 318, 320) où elles rencontrent les parois latérales cylindriques, les bords de rabats adjacents étant espacés pour former lesdites fentes.

9. Système selon la revendication 8, dans lequel les rabats sont de préférence effilés vers l'intérieur en section transversale, de leur base arquée respective vers des pointes centrales (330, 332, 334) respectives qui sont espacées autour de ladite ouverture centrale et la définissent.

10. Système selon la revendication 9, dans lequel les rabats croisent la portion de surface de paroi supérieure (294) selon des angles aigus au niveau d'intersections supérieures (330) et croisent la portion de surface de paroi inférieure (295) selon des angles obtus au niveau d'intersections inférieures (332) pour former une position de repos de rabat à inclinaison vers le haut, dans lequel les fentes et l'ouverture centrale se combinent pour fournir ladite zone de passage d'écoulement de fluide maximum pour un fluide passant à travers le dispositif.

11. Système selon la revendication 10, dans lequel l'intersection desdits rabats avec lesdites parois latérales est sensiblement à mi-chemin le long de l'axe du dispositif de régulation d'écoulement de fluide.

12. Système selon la revendication 11, dans lequel ledit logement a une portion interne et une portion externe qui télescope sur ladite portion interne, ledit logement incluant des fixations (148, 152 et 150, 154) pour attacher les moitiés ensemble afin d'enserrer ladite cartouche de filtre et ledit dispositif de régulation de pression.

13. Système selon la revendication 12, dans lequel ledit logement interne incorpore des écarteurs internes (280) pour positionner ladite cartouche de filtre dans le logement et incorpore des nervures externes (230, 232) pour positionner le logement interne par rapport au logement externe.

14. Système selon la revendication 13, incluant en outre un écarteur annulaire (190) situé dans ladite extension de cartouche de filtre et mettant en prise une surface inférieure (360) dudit dispositif de régulation de pression, ledit écarteur mettant en prise une paroi d'extrémité (186) dudit logement externe, ledit logement, lorsqu'il est assemblé, attachant la cartouche de filtre, le dispositif de régulation de pression et l'écarteur en alignement axial au sein du logement pour fournir un trajet d'écoulement à travers le filtre de combinaison et un dispositif de régulation de pression qui est commandé par lesdits rabats flexibles.

15. Système selon la revendication 14, dans lequel ledit dispositif de régulation de pression est élastomère et ledit écarteur est rigide et dimensionné pour mettre en prise lesdits rabats afin de réguler la flexion des rabats en réaction à l'écoulement de fluide.
